Europäisches Patentamt

(19) European Patent Office (11) Publication number: **0 059 281**

Office européen des brevets **A1**

(12) **EUROPEAN PATENT APPLICATION**

(21) Application number: **81300910.7**

(22) Date of filing: **04.03.81**

(51) Int. Cl.³: **B 65 D 35/10**
**B 65 D 35/12**

(43) Date of publication of application:
08.09.82 Bulletin 82/36

(84) Designated Contracting States:
AT BE CH DE FR GB IT LI NL SE

(71) Applicant: DIXICO INCORPORATED
P. O. Box 225116
1415 South Vernon Dallas Texas 75265(US)

(72) Inventor: Warren, Naumer Hubert
702, Little Creek Drive
Ducanville Texas 75116(US)

(74) Representative: Arthur, George Fitzgerald et al, .
KILBURN & STRODE 30, John Street
London WC1N 2DD(GB)

(54) Headpiece for collapsible tube.

(57) A headpiece for a collapsible tube is a unitary member made of two different plastics, each plastic providing a different property for the headpiece. The headpiece is formed by extruding on top of one another a first torus like annulus (28a) of a first plastic (A) and a second torus like annulus (28b) of a second plastic (B). The two plastic annuli are simultaneously molded to form the headpiece (46). One plastic (B) forms, primarily, the outer portion of the headpiece and the other plastic (A) forms, primarily, the inner portion of the headpiece.

FIG. 8.

FIG. 9.

FIG. 7.

FIG. IO.

EP 0 059 281 A1

Croydon Printing Company Ltd.

-1-

## HEADPIECE FOR COLLAPSIBLE TUBE

### Background of the Invention

Collapsible tubes are used, as dispensers for toothpaste and shampoo. They are often referred to as squeeze tubes. In forming a collapsible tube of this type, the body or sidewall is formed separately from the headpiece. The headpiece, generally, is molded to the formed sidewall portion.

The sidewall is often a multi-ply, collapsible sheet material having inner and outer plastic plies, usually polyethylene, an interior metal foil ply, usually aluminum. The aluminum acts as a barrier to oxygen penetration and flavorant migration. The polyethylene protects the aluminum from the contents of the tube, provides a convenient printing surface and affects the feel of the tube to the end user. The aluminum and polyethylene are combined in amounts that provide a desired collapsibility and avoidance of spring back. All of this is known in the art and will not be further discussed because the structure of the sidewall does not form a part of this invention except that the headpiece must be bondable to the sidewall.

The headpiece of the tube provides a number of functions. Because it forms one end of the collapsible tube, it must have structural integrity to prevent

0059281

collapse in use. In addition, it must be formed of a material which, like the materials in the sidewall, prevents flavorant migration or deterioration of the contents. Further, the material of the headpiece has to be bonded to the plastic material of the sidewall and it must resist corrosion from the contents of the tube as well as avoid chemically reacting with the contents of the tube. As these functions cannot be provided by the same plastic material, the prior art has attempted to provide other solutions. For example, a barrier member has been provided within the headpiece, adjacent the contents of the tube. This prevents the migration or deterioration of the substances held within the tube. However, the cost of separately forming and inserting this barrier member is high, so that its use is uneconomic. Further, there is a problem in holding the barrier member to the rest of the tube.

It is an object of the present invention to provide a headpiece which provides both the structural integrity and the protection of the contents without the necessity for an additional insert.

It is further object of the present invention to provide a method for forming a unitary headpiece of two plastic materials in an expeditious and efficient manner.

It is a still further object to provide an extrusion die for use in forming a unitary headpiece of two thermoplastic materials.

## Brief Description

A unitary plastic headpiece for a collapsible squeeze tube has two plastic portions. One of the two plastics is compatible with bonding the headpiece to the plastic ply of the collapsible side wall of the squeeze tube. The other plastic is selected to prevent deterioration or migration of the substances contained within the collapsible tube. This dual-plastic unitary headpiece is achieved by extruding a first plastic annulus and a second plastic annulus, each of which have a torus type of shape, in succession, on top of one another from a single extruder die. This dual annulus structure is wiped from the die onto a lower mold piece which mold piece has a configuration that defines the inner surface of the headpiece to be formed. An upper mold piece defining the outer surface of the headpiece to be formed is brought into engagement with the lower mold piece to force the two annuli into the shape of the desired headpiece. Concurrently, the sidewall is supported around the lower mold piece so that the upper edge of the sidewall comes into contact with the plastic annuli and is bonded thereto.

During this essentially transfer molding technique, the lower annulus becomes an inner portion of the headpiece while the upper annulus becomes the outer portion of the headpiece. The upper annulus thus must be of a plastic material compatible with bonding to the plastic ply of the sidewall while the lower annulus must be of a plastic material compatible with the ingredients of the tube and tending to serve the functions of preventing deterioration or migration of the substances within the tube.

Variations in the relative amounts of the plastics in the upper and lower annuli can affect the extent to which, for example, the plastic forming the inner portion of the headpiece can also be used to form or define a portion of the neck and threads of the headpiece.

Brief Description of the Drawings

FIG. 1 is a view of the top portion of a collasible squeeze tube having a headpiece according to the present invention.  FIG. 1 is in part an elevation view and in part a longitudinal sectional view of the headpiece.

FIG. 2 is a longitudinal sectional view of the extruder die employed to form the two annuli which are the starting points for molding the plastic headpiece of this invention, such as the headpiece shown in FIG. 1.

FIG. 3 is a schematic illustration of a first stage in the molding of the FIG. 1 headpiece.  FIG. 3 illustrates the two annuli 28a, 28b formed on the end of the extruder die and positioned immediately above the mold piece 34 employed to define the inner surface of the plastic headpiece.

FIG. 4 is a view similar to FIG. 3 showing the next stage in the operation in which a chilled wiper plate 32 has pushed the two annuli 28a, 28b off the die piece and dropped them onto the inner mold piece 34.

FIG. 5 shows the inner mold piece carrying the two plastic annuli indexed over to a position under and in alignment with the outer mold piece 36 which defines the outer surface of the headpiece to be molded.

FIG. 6 is a view similar to that of FIG. 5 showing the outer mold piece 36 having engaged the inner mold piece 34 to define the mold cavity which forms the plastic headpiece from the two plastic annuli.

FIG. 7 through 10 show the progressive forming of the headpiece as the tube mold parts come together.

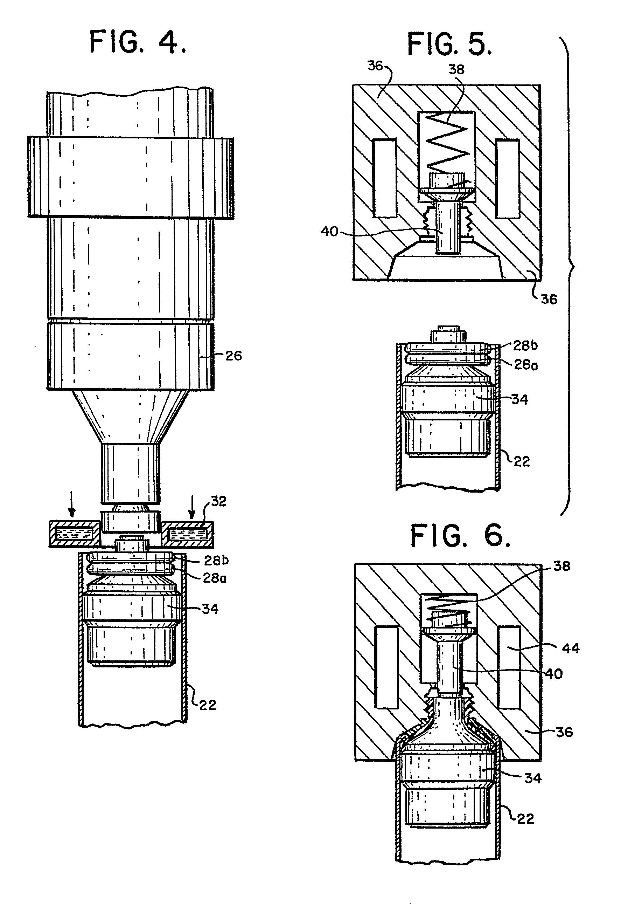

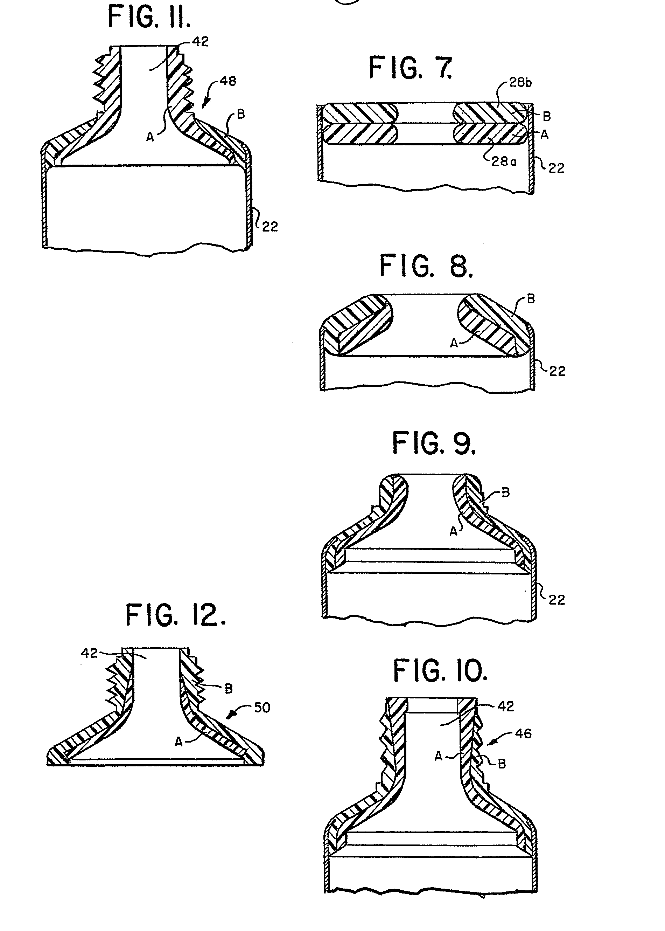

These four FIGS. are in simplified schematic form and illustrate the annuli in cross section. More specifically, FIG. 7 illustrates the two plastic annuli in a condition corresponding to that of FIG. 4. FIG. 8 illustrates the annuli immediately after the inner mold part has contacted the two annuli. FIG. 9 illustrates a further stage in the molding where the two mold parts have partially come together. FIG. 10 illustrates the final stage of the molding when the two mold parts have completed their progression toward one another.

FIG. 11 is a cross sectional view showing a second embodiment of the headpiece in which substantially less of the plastic B of the upper annulus 28b and substantially more of the plastic A of the lower annulus 28a is employed than is represented by the embodiment shown in FIGS. 7 through 10.

FIG. 12 illustrates a still further embodiment of this invention in which the amount of plastic B employed in the upper annulus 28b and the amount of plastic A of the lower annulus 28a are intermediate between the amounts employed to manufacture the headpiece of FIG. 10 and FIG. 11.

## Description of the Preferred Embodiments

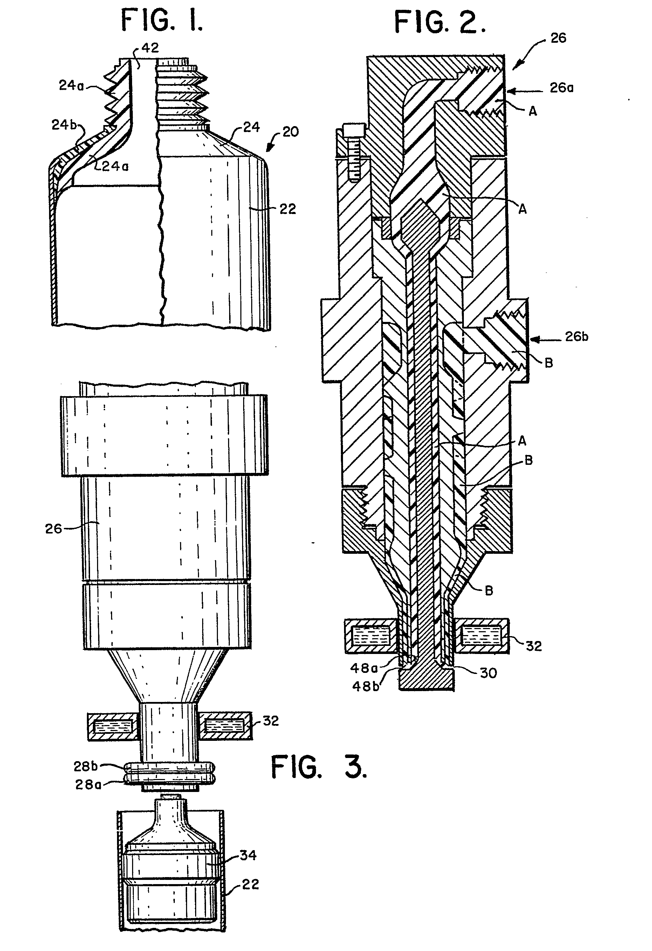

FIG. 1 illustrates a collapsible tube 20 having a cylindrical sidewall portion 22 and a plastic headpiece portion 24. The collapsible wall portion 22 is formed from one of the flexible web materials known in the art such as a multi-ply web having outer polyethylene plies and a center or interior aluminum ply.

The headpiece portion 24 has an inner plastic portion 24a and an outer plastic portion 24b. The two portions together form a unitary headpiece 24. The headpiece 24 is bonded to the wall 22 by plastic adhesion of the outer plastic 24b of the headpiece 24 to the inner plastic ply of the wall 22. That bonding is accomplished during molding of the headpiece.

The material of the outer plastic 24b is selected to be bondable with the inner plastic ply of the wall 22. Most tube walls 22 presently employed in the art have outer and inner polyethylene plies. Therefore, the outer plastic 24b of the headpiece 24 is preferably formed of polyethylene. However, should the composition of the inner plastic ply of the wall 22 be different, the outer plastic 24b of the headpiece can be varied accordingly.

The inner plastic 24a must be compatible with the contents of the tube and, in many cases, must act to prevent deterioration of those contents; for example, by preventing oxygen penetration. In cases where the inner plastic 24a must be hygroscopic, it can be formed of any of the standard polyamide materials generally sold under the name nylon. Though nylon is particularly useful when it is important that the inner plastic 24a be hygroscopic, nylon has disadvantages. In particular, a higher temperature is required to effect molding of the nylon so that, other factors being equal, greater cooling is also required after formation of the headpiece. Thus, slower processing is experienced employing nylon as the inner plastic 24a.

Other materials which can be employed in forming the inner plastic 24a are ionomers, such as those sold by DuPont under the trademark Surlyn. At present, polypropylene is the preferred material for the inner plastic 24a for the combined reasons of cost, effectiveness, and speed of manufacture.

The examples just given for the material of the inner plastic 24a, i.e., polypropylene, polyamide and ionomers, are the presently preferred types of materials for the inner plastic 24a when the outer plastic 24b is formed of polyethylene. If the composition of the outer plastic 24b is varied, the composition of the inner plastic may have to be varied, so as to be compatible with the material of the outer plastic, while still retaining the necessary properties for the inner plastic.

Because of the method of forming this headpiece, it is a unitary structure of plastic 24b compatible with bonding to a plastic ply of the sidewall 22 and plastic 24a providing protection for the product contained in the tube. Thus it is not necessary to insert a barrier member into the headpiece to provide any additional properties.

FIGS. 2 and 3 show the die 26 for coextrusion of the two plastics into the composite extrusion which is then molded to form the headpiece 24. The plastic A, which forms the lower annulus 28a and thus the inner portion 24a of the headpiece, is fed to the die 26 through inlet 26a as indicated by the arrow in FIG. 2. The plastic B, which forms the upper annulus 28b, and thus the outer layer 24b, is fed to the die 26 at inlet 26b, as indicated by the arrow in FIG. 2. The structure of the die 26, including mandrels, collars, etc., is known in the art and thus need not be more specifically illustrated or described.

The thermoplastic material A fed at inlet 26a follows a path in the die generally designated by the reference designation A to exit at the port designated 30. The thermoplastic material B enters the die at inlet 26b and follows the path B to exit at the port 30. The extrusion sequence in the extrusion die 26 assures that the plastic A is extruded first so as to form a lower annulus 28a and that plastic B is extruded immediately thereafter to form the upper annulus 28b.

An axially movable water cooled wiper 32 in the form of an annulus around the outlet neck of the extrusion die 26 is used to wipe the plastic annuli 28a, 28b off the neck of the die 26. After the two plastic annuli 28a, 28b have been extruded from the outlet nozzle 30 of the extrusion die 26, these two annuli 28a, 28b will be sitting on the lower end of the extrusion die 26. As soon as the two hot plastic annuli 28a and 28b have been formed, the water cooled wiper 32, is brought axially downward to wipe the two annuli off the end of the die and cause them to drop onto a lower mold piece 34, (see FIG. 4).

The mold piece 34 is configured to define the inner surface of the headpiece to be molded and thus can be termed the inner mold piece. The sidewall 22 is held by light friction fit around the inner mold piece 34 and extends upward into the area adjacent to where the hot plastic annuli fall to assure that contact will be made between the inner plastic ply of the sidewall 22 and the hot plastic of the annuli thereby causing the desired adhesion of headpiece to sidewall. The wiper 32 is water cooled to avoid having the hot plastic of the annuli stick to the wiper 32 during the wiping operation.

After the annuli have dropped onto the inner mold piece 34 shown in FIG. 4, the inner mold piece 34 is indexed to a position under and in alignment with an upper mold piece 36 as shown in FIG. 5. The upper mold piece 36 has a surface configured to define the outer surface of the headpiece and thus can be called the outer mold piece. This outer mold piece 36 includes a spring 38 loaded pin 40 that extends down into the cavity defined by the outer mold piece 36.

After the two mold pieces 34 and 36 have been brought into the alignment shown in FIG. 5, they are brought together, as shown in FIG. 6, into engagement thereby defining a cavity in which the headpiece is molded. The pin 40 abuts against the upper edge of the inner mold piece 34 and is held tightly against the inner mold piece 34 by the spring 38 to assure that the plastic material being molded does not block the passage way 42 required through the headpiece 24.

As can be seen in FIG. 6, the mold cavity although primarily defined by the two major mold pieces 34 and 36 is also, in part, defined by the lower rim of the pin 40 and by the upper edge portion of the sidewall 22.

The mold is water cooled by water passages 44 to effect cooling and solidifying of the plastic materials A and B that form the molded head 24.

After formation of the headpiece in the mold as described, the tube now having a formed headpiece is moved to other positions for whatever finishing operations may be required.

FIGS. 7 through 10 illustrate in somewhat idealized form the configuration of the plastic materials A and B during the process of molding the finished headpiece 24 from the composite annulus structure 28a, 28b. FIG. 7 illustrates the composite extrusion of plastics A and B on their formation as they are dropped from the outlet end of die 26 onto the inner mold piece 34. As soon as these hot, fluid plastic materials A and B contact the surface of the inner mold piece 34, they tend to assume the shape shown in FIG. 8. Upon further movement of the two mold parts 34 and 36 together, the plastics A and B form the configuration illustrated in FIG. 9 in which it can be seen that the lower annulus 28a has begun for form the inner plastic portion A and the upper annulus 28b has begun to form the outer plastic portion B. The completion of bringing together the two mold pieces 34 and 36 provides the end result as shown in FIG. 10; namely a headpiece 46 having integral plastic portions A and B.

The headpiece 46 shown in FIG. 10 differs from the headpiece 24 shown in FIG. 1 in that the proportion of the two plastics A and B are different. More particularly, FIG. 10 represents a situation where there is relatively more of the plastic B than is the case in FIG. 1.

Further headpiece configurations 48 and 50 are shown in FIGS. 11 and 12 in which different amounts of the plastics A and B have been employed. The differences in the various headpieces shown herein 24, 46, 48 and 50 are not due to different methods of formation but are rather due to the relative amounts of plastic materials A and B employed for forming the upper and lower annuli 28b and 28a. Thus, for a configuration of a headpiece shown in FIG. 11, the annulus 28a has to be substantially thicker than the annulus 28b whereas in the configuration shown in FIG. 10, the relative sizes of the annuli 28a and 28b are much more similar.

It is important that the outer part of the shoulder portion of the headpiece be of the plastic B which is adapted to bond to the plastic ply of the sidewall 22. Depending upon the materials involved, their relative costs and the application, the neck portion of the headpiece may be formed solely of the inner plastic material A with no covering of the plastic material B.

The change in relative amounts of the two plastics A and B can readily be accomplished by varying the shape of the die 26 or by increasing the pressure on the plastics fed at inlets 26a or 26b as appropriate, to vary the amount of plastic extruded at the exit port 30.

In each case, the peripheral lower edge portion of the headpiece is composed of the B plastic in order to bond to the plastic ply of the tube sidewall 22. In each case, the A plastic extends over the entire inner wall of the headpiece to assure that the entire headpiece is impermeable.

The composition extrusion 28a, 28b can be formed by first extruding one of the plastics A through the annular outlet 48a and annular exit port 30 as an annulus followed by extrusion of the second plastic B through the annular outlet 48b and exit port 30 as a second annulus. A slightly different die configuration would permit extrusion of the two annuli simultaneously. in any case, the composite dual annulus 28a, 28b is extruded on the tip 26t of the die 26.

What Is Claimed Is:

1. A unitary headpiece for attachment to the end of a tube, said headpiece being formed of an outer plastic portion and an inner plastic portion bonded together by a thermoplastic bond, said outer portion of said headpiece being formed of a first plastic material adapted to be bonded to the sidewall of said tube, said first and second plastic portions defining the entire headpiece structure, said inner portion of said headpiece being formed of a seocnd plastic material compatible with and serving to protect the contents of said tube, said headpiece being molded from a composite annulus having first and second annular portions of said first and second plastic materials respectively.

2. The unitary headpiece of Claim 1 wherein said second plastic material of said inner portion is impervious to the passage of gases.

3. The unitary headpiece of Claim 1 wherein said outer portion covers only a shoulder portion of said inner layer.

4. The unitary headpiece of Claim 1 attached to a collapsible tube, said tube having an outer plastic ply of the same material as said first plastic material of said outer portion.

5. A dispensing tube comprising a deformable body having low permeability and a unitary headpiece having a peripheral lower edge portion bonded to an upper end of said body, said headpiece having an outer plastic portion formed of a first plastic material and an inner plastic portion formed of a second plastic material, said inner and outer portions being bonded together by a thermoplastic bond, said outer plastic portion including at least said peripheral lower edge portion, said first and second plastic portions defining the entire headpiece structure, said first plastic material being adapted to be bonded to said body, said second plastic material being substantially impermeable and extending along the entire inner surface of said headpiece, said headpiece being molded from a composite annulus having first and second annular portions of said first and second plastic materials respectively.

6. A die for coextruding two plastic materials for formation into a unitary headpiece for attachment to a tube, said die comprising:

    a. a first flow path for a first plastic material, said flow path including:

        (1) a first inlet;

        (2) a first path for conducting the plastic material from said first inlet; and

        (3) a first outlet, at the end of said die opposite said first inlet for extruding an annulus of said first plastic material;

    b. a second flow path for a second plastic material, said second flow path including:

        (1) a second inlet;

        (2) a second path for conducting the plastic material from said second inlet; and

        (3) a second outlet, at an end of said die opposite said second inlet for extruding an annulus of said second plastic material;

    c. said first outlet being immediately adjacent said second outlet.

7. The die of Claim 6 wherein said first and second outlets communicate with an annular exit port.

8. The die of Claims 6 or 7 further comprising: a cooled wiper member movable across said end of said die to wipe off whatever annuli of said plastic material is formed on said end of said die.

9. The method for forming a dual plastic unitary headpiece and attaching it to the end of a dispensing tube comprising the steps of:

extruding a first annulus of a first plastic material and a second annulus of a second plastic material at the tip of an extrusion die, said second annulus being on top of and abutting said first annulus to provide a composite extrusion, said first plastic material being compatable with being bonded to said dispensing tube, said second plastic material being substantially impermeable,

wiping said composite extrusion from said die into a mold which includes the end of said dispensing tube; and

molding said headpiece into a finished form attached to said dispensing tube.

10. The method of Claim 9 further comprising the step of:

cooling a wiper member for use in said step of wiping.

11. The method of Claim 9 wherein the upper annulus formed on said die forms at least the outer peripheral lower edge portion of said unitary headpiece.

12. The method of Claims 10 or 11 wherein the lower annulus of said composite extrusion forms an inner portion of said unitary headpiece including at least the entire inner surface of said headpiece.

FIG. I.

FIG. 2.

FIG. 3.

FIG. 4.

26

32

28b
28a

34

22

FIG. 5.

36

38

40

28b
28a

34

22

36

FIG. 6.

38

44

40

36

34

22

0059281

3/3

FIG. 11.

FIG. 7.

FIG. 8.

FIG. 9.

FIG. 12.

FIG. 10.

| Category | DOCUMENTS CONSIDERED TO BE RELEVANT | | CLASSIFICATION OF THE APPLICATION (Int. Cl.³) |
|---|---|---|---|
| | Citation of document with indication, where appropriate, of relevant passages | Relevant to claim | B 65 D 35/10 |
| X | US - A - 3 565 293 (SCHULTZ) <br> + Totality + <br><br> -- | 1,2,3, 5 | B 65 D 35/12 |
| X | US - A - 4 011 968 (MC GHIE) <br> + Fig. 3; column 4, lines 17-37 + <br><br> -- | 1,2,5 | |
| A | DE - B - 1 261 657 (KAUTEX) <br><br> -- | | |
| A | FR - A - 1 291 618 (TEILLAC) <br><br> ---- | | TECHNICAL FIELDS SEARCHED (Int. Cl.³) <br><br> B 65 D 35/00 <br> B 29 D 23/00 <br> B 29 F 3/00 |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | | | |
|---|---|---|---|
| X | The present search report has been drawn up for all claims | | |
| | Place of search <br> VIENNA | Date of completion of the search <br> 07-10-1981 | Examiner <br> JANC |

EPO Form 1503.1  06.78